# EUROPÄISCHE PATENTSCHRIFT

(11) **EP 4 574 396 B1**
(45) Veröffentlichungstag und Bekanntmachung des Hinweises auf die Patenterteilung: **27.05.2026**
(21) Anmeldenummer: 24220518.5
(22) Anmeldetag: 17.12.2024
(51) Int. Cl.: B29C 49/42, B29C 49/20

(54) **BEHÄLTERPRODUKTIONSANLAGE MIT AUSSCHUSSSAMMELEINRICHTUNG**
CONTAINER PRODUCTION INSTALLATION WITH REJECT COLLECTION DEVICE
INSTALLATION DE PRODUCTION DE RÉCIPIENTS AVEC DISPOSITIF DE COLLECTE DE REBUTS

(30) Priorität: 18.12.2023 DE 102023135482
(43) Veröffentlichungstag der Anmeldung: 25.06.2025
(73) Patentinhaber: KHS GmbH, 44143 Dortmund (DE)
(72) Erfinder: Binnenbruck, Frederik, 44143 Dortmund (DE); Bleeker, Frank, 44143 Dortmund (DE)
(74) Vertreter: Andrejewski - Honke Patent- und Rechtsanwälte Partnerschaft mbB

(56) Entgegenhaltungen:
- DE-A1- 102017 120 106
- DE-A1- 102022 104 554
- DE-U1- 202019 102 193
- JP-A- 2001 171 806

## Beschreibung

Die Erfindung betrifft eine Behälterproduktionsanlage für Kunststoffflaschen umfassend eine Ausschusssammeleinrichtung mit einem Aufnahmeraum für ein Sammelbehältnis, wobei der Aufnahmeraum eine durch eine Barriere verschließbare Zuführöffnung für Ausschussbehälter und eine Entnahmeöffnung für das Sammelbehältnis aufweist. Gegenstand der Erfindung ist auch eine Behälterproduktionsanlage für Kunststoffflaschen mit der Ausschusssammeleinrichtung.

Die vorliegende Erfindung bezieht sich insbesondere auf eine Behälterproduktionsanlage in der Getränkeindustrie, bei der bei einem hohen Durchsatz Behälter, insbesondere in Form von Kunststoffflaschen, geformt und/oder modifiziert und/oder befüllt werden, um letztlich abgefüllte Getränke bereitzustellen. Die Behälterproduktionsanlage kann beispielsweise eine Zuführung von Vorformlingen, eine Blasmaschine, eine Beschichtungsmaschine, eine Etikettierungsmaschine, eine Füllmaschine und eine Verschließmaschine umfassen. Die verschiedenen Maschinen können einzeln oder vorzugsweise in Kombination zueinander vorhanden sein, wobei auch ein Verblocken der aufeinanderfolgenden Maschinen möglich ist. Damit ist gemeint, dass die vorgesehenen Maschinen die Behälter mit Karussells, Sternrädern, Ketten oder dergleichen direkt und einander übergeben, wobei ein kontinuierlicher Strom mit einem vorgegebenen Durchsatz gefördert wird. Die Erfindung ist jedoch nicht auf solche Ausgestaltungen beschränkt. Grundsätzlich können auch Staustrecken, Puffer oder dergleichen vorgesehen sein.

Bei dem Produktionsprozess ist es zweckmäßig, fehlerhafte Behälter, die nachfolgend auch als Ausschussbehälter bezeichnet werden, schnell aus dem Produktionsprozess zu entfernen, um unter anderem unnötigen Abfall, einen unnötigen Arbeitsaufwand sowie gegebenenfalls auch Verschmutzungen oder Beschädigungen der Behälterproduktionsanlage zu vermeiden. Wenn beispielsweise bei einem Blasprozess eine nicht maßhaltige Kunststoffflasche resultiert, kann möglicherweise nachfolgend ein Etikett nicht appliziert werden. Wenn bei einer fehlerhaften Kunststoffflasche eine erhöhte Berstgefahr besteht, können beispielsweise auch beim Füllprozess erhebliche Verschmutzungen resultieren.

Vor diesem Hintergrund sind aus der Praxis bei Behälterproduktionsanlagen für Kunststoffflaschen verschiedene Ausgestaltungen von Ausschusssammeleinrichtungen bekannt.

Bei einer aus der Praxis bekannten Ausschusssammeleinrichtung werden Ausschussbehälter über einen Ausschusspfad ausgeschleust und dann in eine offene Kiste abgeworfen. Der Ausschusspfad kann beispielsweise mit einer einfachen Klappe verschließbar sein, um einen Wechsel der Kiste zu ermöglichen. Der Ausschusspfad kann dann so schmal und lang ausgeführt werden, dass im Betrieb der Behälterproduktionsanlage auch bei einer unsachgemäßen Bedienung eine Gefährdung von Personen ausgeschlossen ist. Insbesondere muss sichergestellt werden, dass Personen nicht mit ihren Gliedmaßen bei den Produktionsbetrieb in bewegliche Teile der laufenden Behälterproduktionsanlage eingreifen können. Entsprechende Sicherheitsvorgaben ergeben sich beispielsweise aus der DIN EN ISO 13857:2020-04 "Sicherheit von Maschinen - Sicherheitsabstände gegen das Erreichen von Gefährdungsbereichen mit den oberen und unteren Gliedmaßen".

Aus der Praxis ist des Weiteren eine gattungsgemäße Ausschusssammeleinrichtung für eine Behälterproduktionsanlage bekannt, welche als eine Art Rollwagen ausgestaltet ist. Der Rollwagen kann unmittelbar an eine Maschine der Behälterproduktionsanlage an einer geeigneten Position herangefahren werden, um Ausschussbehälter aufzunehmen. Auch wenn der Rollwagen beweglich ist, verbleibt dieser bei dem Produktionsbetrieb an seiner vorgesehenen Stelle. Der Rollwagen bildet einen Aufnahmeraum für einen Sammelbehältnis in Form einer Kunststoffkiste, wobei der Aufnahmeraum eine durch eine Barriere verschließbare Zuführöffnung für die Ausschussbehälter aufweist.

Das Sammelbehältnis kann an einer seitlichen Entnahmeöffnung entnommen werden, um dann in regelmäßigen Abständen die Ausschussbehälter zu entsorgen. Bei dem Entleeren des Sammelbehältnisses bzw. bei dem Austausch gegen ein leeres Sammelbehältnis kann ein Benutzer die Zufuhröffnung mit der Barriere verschließen, damit dann keine Ausschussbehälter in den Aufnahmeraum fallen. Üblicherweise ist dann oberhalb der Barriere ein Reservoir für eine Zwischenspeicherung einer gewissen Anzahl von Ausschussbehältern vorgesehen. Sobald wieder ein leeres Sammelbehältnis in dem Aufnahmeraum angeordnet ist, kann ein Benutzer die Barriere wieder öffnen.

Das Sammelbehältnis und die Konstruktion des Rollwagens sind so ausgelegt, dass auch bei einem entfernten Sammelbehältnis gebildete Öffnungen von einem Benutzer nicht soweit durchgriffen werden können, dass Gliedmaßen einen Gefährdungsbereich der Behälterproduktionsanlage erreichen können.

Behälterproduktionsanlage für Kunststoffflaschen gemäß dem Oberbegriff des Patentanspruchs 1 sind auch aus der DE 10 2017 120 106 A1 und der DE 20 2019 102 193 U1 bekannt.

Der vorliegenden Erfindung liegt die Aufgabe zugrunde, eine Behälterproduktionsanlage mit einer Ausschusssammeleinrichtung effizienter und benutzerfreundlicher auszugestalten.

Gegenstand der Erfindung und Lösung der Aufgabe ist eine Behälterproduktionsanlage für Kunststoffflaschen gemäß Patentanspruch 1.

Ausgehend von einer gattungsgemäßen Behälterproduktionsanlage für Kunststoffflaschen ist erfindungsgemäß vorgesehen, dass eine erste Sicherheitsfunktion vorgesehen ist, welche die Anordnung des Sammelbehältnisses in dem Aufnahmeraum überprüft und dass eine zweite Sicherheitsfunktion vorgesehen ist, welche in Bezug auf die Zuführöffnung die Schließstellung der Barriere überprüft.

Im Rahmen der Erfindung sind die erste Sicherheitsfunktion und die zweite Sicherheitsfunktion insbesondere dazu vorgesehen, um hinsichtlich der Bediener auch bei einer unsachgemäßen Bedienung die geforderte Maschinensicherheit zu gewährleisten. Im Rahmen der Erfindung ist es also nicht notwendig, die Maschinensicherheit alleine durch die Geometrie und insbesondere die Größe von Öffnungen und die Länge von Zuführpfaden sicherzustellen. Vielmehr können die erste Sicherheitsfunktion und die zweite Sicherheitsfunktion so genutzt werden, dass die Gefahr von Verletzungen und Beeinträchtigungen auch bei einer unsachgemäßen Handhabung vermieden oder zumindest reduziert werden.

Basierend auf dem erfindungsgemäßen Grundprinzip sind verschiedene konstruktive Ausgestaltungen mit jeweils spezifischen Vorteilen denkbar.

Grundsätzlich kommt beispielsweise eine mechanische und/oder magnetische Implementierung der ersten Sicherheitsfunktion und der zweiten Sicherheitsfunktion in Betracht, ohne dass dafür zwingend elektrische Sensoren, eine elektrische Steuerung oder allgemein die Verarbeitung elektrischer Signale notwendig sind.

Beispielsweise ist es denkbar, dass die Barriere in Bezug auf die Zufuhröffnung in der Schließstellung mechanisch und/oder magnetisch einrastet, wobei auch das Sammelbehältnis in seiner eingeschobenen Position in dem Aufnahmeraum arretierbar ist. Insbesondere ist es denkbar, dass erst durch das Überführen der Barriere in die Schließstellung das Sammelbehältnis mechanisch und/oder magnetisch freigegeben wird, während die Barriere in der Schließstellung einrastet. Das Sammelbehältnis kann dann ausgeleert oder gegen ein leeres Sammelbehältnis ausgetauscht werden. Dann ist es beispielsweise möglich, dass erst durch das Einsetzen des Sammelbehältnisses in den Aufnahmeraum magnetisch und/oder durch eine geeignete mechanische Betätigung die Barriere wieder freigegeben wird, wenn dabei das Sammelbehältnis bei oder unmittelbar vor Erreichen seiner Aufnahmeposition mit dem Aufnahmeraum wieder verriegelt wird.

Im Rahmen einer solchen exemplarisch dargestellten mechanischen und/oder magnetischen Betätigung wird auf besonders einfache Weise ein hohes Maß an Sicherheit bereitgestellt. Durch eine geeignete Ausgestaltung der ersten Sicherheitsfunktion und der zweiten Sicherheitsfunktion kann ausgeschlossen werden, dass gleichzeitig das Sammelbehältnis entnommen ist und die Zufuhröffnung offen ist, d. h. die Barriereschicht sich nicht in der Schließstellung befindet.

Grundsätzlich ist es auch möglich, die Bewegung des Sammelbehältnisses bei den Einsetzen und Entnehmen aus dem Aufnahmeraum einerseits und die Positionierung der Barriere vor der Zuführöffnung mechanisch zu koppeln. Denkbar ist beispielsweise eine Ausgestaltung, bei der die Barriere bei dem Entnehmen des Sammelbehältnisses aus dem Aufnahmeraum unmittelbar in die Schließstellung überführt wird, wobei dann die Barriere durch das Einsetzen des Sammelbehältnisses Zuführöffnung wieder frei gibt. Dabei ist dann durch geeignete Maßnahmen sicherzustellen, dass die Barriere nur durch die Einschubbewegung des Sammelbehältnisses und nicht von einem Bediener unsachgemäß per Hand bewegt werden kann.

Gemäß einer bevorzugten Ausgestaltung der Erfindung ist jedoch vorgesehen, dass zur Bereitstellung der ersten Sicherheitsfunktion und/oder der zweiten. Sicherheitsfunktion elektronische Signale verarbeitet werden. Beispielsweise kann in Ergänzung der zuvor beschriebenen mechanischen und/oder magnetischen Betätigung durch die Verarbeitung elektronischer Signale eine Statusinformation generiert werden, um diese einem Benutzer mit geeigneten Mitteln anzuzeigen und/oder diese an eine zentrale Maschinensteuerung zu übergeben.

Im Rahmen der Erfindung kann die erste Sicherheitsfunktion und/oder die zweite Sicherheitsfunktion zumindest ein Element ausgewählt aus der Gruppe Lagenschalter, Lichtschranke und Sensor aufweisen. Der Lagenschalter kann beispielsweise ein Endlagenschalter sein, der beispielsweise die Schließstellung der Barriere oder die vollständige Anordnung des Sammelbehältnisses im Aufnahmeraum überwacht. Entsprechende Signale können in ähnlicher Weise mit Lichtschranken und Sensoren, insbesondere Positions- oder Abstandssensoren, ermittelt werden.

Als Alternative zu der zuvor beschriebenen mechanischen und/oder magnetischen Betätigung und Ausgestaltung der ersten Sicherheitsfunktion sowie der zweiten Sicherheitsfunktion ist es auch möglich, dass eine rein elektronische Überwachung insbesondere mit den zuvor genannten Elementen erfolgt, ohne dass das Sammelbehältnis oder die Barriere mechanisch blockierbar sind.

Beispielsweise können einem Benutzer klare Anweisungen in einem Benutzerhandbuch, einem grafischen HMI (Human Machine Interface) oder dergleichen bereitgestellt werden, wonach das Sammelbehältnis nur dann entnommen werden darf, wenn sich die Barriere in der Schließstellung befindet. Diese vorgegebene Vorgehensweise kann dann mit der ersten Sicherheitsfunktion und der zweiten Sicherheitsfunktion überwacht werden.

Sofern dann bei einem entnommenen Sammelbehältnis die geschlossene Barriere geöffnet oder bei einer geöffneten Barriere das Sammelbehältnis aus dem Aufnahmeraum herausgenommen wird, kann mit der ersten Sicherheitsfunktion und/oder der zweiten Sicherheitsfunktion eine Not-Aus-Signal ausgelöst werden, welches die Behälterproduktionsanlage anhält. Je nach Ausgestaltung einer Maschinensteuerung kann das Not-Aus-Signal auch als Türstörung-Signal oder entsprechend eines Türstörung-Signals verarbeitet werden, worauf beispielsweise die Behälterproduktionsanlage schnellstmöglich in einen sicheren Zustand überführt wird. Auch dann können die Vorgaben für die Sicherheit von Maschinen eingehalten werden, wobei ein Not-Aus nur bei einer Fehlbedienung der Anlage erfolgt. Nachteilig ist dabei selbstverständlich, dass die beschriebene Fehlbedienung unmittelbar zu einem Anhalten der Behälterproduktionsanlage führt, wobei der Produktionsbetrieb unterbrochen wird. Dabei ist auch zu beachten, dass das erneute Anfahren der Behälterproduktionsanlage mit einem sehr großen Aufwand verbunden sein kann.

Gemäß einer besonders bevorzugten Ausgestaltung erfolgt bei der Implementierung der ersten Sicherheitsfunktion und der zweiten Sicherheitsfunktion eine Verarbeitung von elektronischen Daten, wobei die Barriere in der Schließstellung und/oder das Sammelbehältnis innerhalb des Aufnahmeraums mechanisch blockierbar ist bzw. sind. Eine mechanische Sperre kann beispielsweise durch einen Aktuator erfolgen und/oder elektronisch entriegelbar sein, wozu dem Fachmann geeignete Ausführungsformen aus der Praxis bekannt sind.

Die erste Sicherheitsfunktion und die zweite Sicherheitsfunktion können dann so implementiert werden, dass eine bestimmte Verfahrensweise für einen Benutzer vorgegeben ist, wodurch das versehentliche Auslösen einer Not-Aus-Funktion sicher vermieden werden kann.

Folglich ist gemäß einer bevorzugten Ausgestaltung der Erfindung vorgesehen, dass ein Barrierearretierelement zum Arretieren der Barriere in der Schließstellung vorgesehen ist. Zusätzlich oder alternativ kann auch ein Behältnisarretierelement zum Arretieren des Sammelbehältnisses in einer Einschubposition vorgesehen sein.

Die Barriere kann im Rahmen der Erfindung als eine Art Klappe oder Blende ausgeführt sein, welche in der Schließstellung die Zuführöffnung blockiert.

Gemäß einer bevorzugten Ausgestaltung der Erfindung ist vorgesehen, dass die Barriere von der Schließstellung in Bezug auf die Zuführöffnung in eine Betriebsstellung überführbar ist, wobei die Barriere in der Betriebsstellung die Entnahmeöffnung für das Sammelbehältnis verschließt.

Die Barriere kann beispielsweise derart flexibel ausgeführt sein, dass diese nach Art eines Rollladens von der Schließstellung über einen Bogen in die Betriebsstellung überführt werden kann. Die Barriere hat dann eine Doppelfunktion, wobei das Sammelbehältnis in der Betriebsstellung von der Barriere verdeckt ist. Die Barriere kann dann in der Betriebsstellung Verschmutzungen zurückerhalten, wobei auch ein versehentliches Entnehmen des Sammelbehältnisses vermieden wird.

Zusätzlich ist die Barriere in der beschriebenen Ausführungsform sehr leicht per Hand zu bedienen, wobei die Handhabung für einen Benutzer auch besonders intuitiv ist. Um überhaupt zu dem Sammelbehältnis zu gelangen, muss dann die Barriere ausgehend von der Betriebsstellung betätigt und insbesondere hochgeschoben werden, wobei dann unmittelbar eine Überführung in die Schließstellung erfolgt. Die Schließstellung entspricht dann insbesondere einer oberen Endposition der Barriere, wobei die erfindungsgemäße erste Sicherheitsfunktion und zweite Sicherheitsfunktion durch die Ausgestaltung der Barriere intuitiv unterstützt werden.

Unabhängig von der konkreten Ausgestaltung der ersten Sicherheitsfunktion und der zweiten Sicherungsfunktion sowie der Barriere ist gemäß einer bevorzugten Ausgestaltung der Erfindung vorgesehen, dass bei einem Verschluss der Zufuhröffnung durch die Barriere oberhalb der Barriere noch ein Reservoir für die Zwischenspeicherung von Ausschussbehältern gebildet ist.

Dieses Reservoir ist zweckmäßigerweise so groß bemessen, dass bei einem üblichen Produktionsbetrieb eine zu erwartende Anzahl von Ausschussbehältern aufgenommen werden kann, während ein volles Sammelbehältnis geleert bzw. gegen ein leeres Sammelbehältnis ausgetauscht wird.

Dabei kann gegebenenfalls auch eine Überwachung des Reservoirs erfolgen, um bei einem zu hohen Füllstand des Reservoirs ein geeignetes Signal abzugeben, wobei auch eine mehrstufige Überwachung bzw. Generierung von Signalen erfolgen kann. Beispielsweise ist es denkbar, zunächst eine optische und/oder akustische Warnmeldung abzugeben, wenn sich das Reservoir bei einer geschlossenen Barriere füllt. Bevor ein Rückstau von Ausschussbehältern dann den Produktionsprozess beeinflusst und gegebenenfalls auch Maschinen der Behälterproduktionsanlage beschädigen kann, kann gegebenenfalls auch ein Not-Aus-Signal ausgelöst werden.

Die Erfindung umfasst eine Ausschusssammeleinrichtung, welche lediglich für die Aufnahme des Sammelbehälters vorgesehen ist und die Ausschusssammeleinrichtung mit dem darin angeordneten Sammelbehältnis als Bestandteil.

Bevorzugte Aspekte der Erfindung betreffen vor diesem Hintergrund auch die Ausgestaltung des Sammelbehältnisses selbst und die konkrete Anordnung des Sammelbehältnisses in dem Aufnahmeraum.

So ist gemäß einer bevorzugten Ausgestaltung der Erfindung vorgesehen, dass das Sammelbehältnis als Bestandteil der Ausschusssammeleinrichtung in dem Aufnahmeraum angeordnet und an einem Behältnisrand, insbesondere einem oberen Behältnisrand, in dem Aufnahmeraum gehalten ist. Der Aufnahmeraum kann beispielsweise Schienen zum Halten des Behältnisrandes aufweisen, wobei dann durch die seitlichen Schienen und dem darauf geführten Behältnisrand eine besonders genaue Positionierung des Sammelbehältnisses in dem Aufnahmeraum möglich ist.

In diesem Zusammenhang ist insbesondere vorgesehen, dass das Sammelbehältnis über den Behältnisrand hängend abgestützt ist, sodass dann in Bezug auf einen Hallenboden Unebenheiten, eine variierende Höhe oder dergleichen keine Rolle spielen. Für eine solche hängende Anordnung muss lediglich eine ausreichende Mindesthöhe vorgesehen sein.

Ausgehend von diesem Konzept sind verschiedene Ausgestaltungen des Sammelbehältnisses denkbar. Das Sammelbehältnis kann beispielsweise als eine Art Kiste ausgeführt sein, welche außerhalb des Aufnahmeraums beispielsweise direkt mit Ihrem Boden abgestützt ist. Um das Sammelbehältnis dann bei dem Einführen in den Aufnahmeraum in einem gewissen Maße anzuheben, können Schienen mit einer Einlaufschräge versehen sein. Ein entsprechendes Konzept ist auch möglich, wenn das Sammelbehältnis Rollen aufweist, welche dann durch das Anheben bei dem Einführen in den Aufnahmeraum von ein Boden angehoben werden.

Das Sammelbehältnis kann beispielsweise als Kunststoffkasten ausgestaltet sein, wobei aber auch andere Ausführungen in Betracht kommen. Beispielsweise ist auch ein Gitterkorb als Sammelbehältnis geeignet.

Gerade bei einer Führung des Sammelbehältnisses mit Schienen über einen Behältnisrand ist die Erfindung jedoch nicht nur auf starre Ausgestaltungen des Sammelbehältnisses beschränkt.

Beispielsweise kann der Behältnisrand auch von einer Art Rahmen gebildet sein, in den dann ein flexibles Netz oder ein flexibler Beutel eingehängt ist. Dabei ist es dann auch möglich, die Ausschussbehälter nachfolgend zunächst in einem solchen Netz oder Beutel zu belassen, um diese einer weiteren Verwertung, einem Recycling oder einer Entsorgung zuzuführen. Zum Austausch kann dann ein leeres Netz oder ein leerer Beutel in den Rahmen eingeengt werden.

Im Rahmen der Erfindung wird die geforderte Sicherheit von Maschinen durch die erste Sicherheitsfunktion und zweite Sicherheitsfunktion bereitgestellt. Vor diesem Hintergrund kann auch ein Sammelbehältnis mit einem vergleichsweise großen Füllvolumen eingesetzt werden, welches dann entsprechend in größeren Zeitabständen geleert werden muss.

Insbesondere kann vorgesehen sein, dass der Aufnahmeraum für das Sammelbehältnis so groß ist, dass dieser auch von einem Benutzer betreten werden kann, auch wenn eine solche Vorgehensweise in der Regel nicht vorgesehen ist. Das Betreten des entsprechend großen Aufnahmeraums ist insbesondere dann möglich, wenn das Sammelbehältnis entfernt ist. Dabei ist im Rahmen der Erfindung jedoch sichergestellt, dass die Zufuhröffnung durch die Barriere verschlossen ist, sodass ein Benutzer auch dann bei dem laufenden Betrieb der Behälterproduktionsanlage nicht mit seinen Gliedmaßen zu Gefährdungsbereichen innerhalb der Behälterproduktionsanlage vordringen kann.

Vor diesem Hintergrund ist gemäß einer bevorzugten Ausgestaltung der Erfindung, dass das Sammelbehältnis ein Füllvolumen zwischen 120 l (Liter) und 800 l, insbesondere zwischen 200 l und 500 l aufweist.

Bereits zuvor wurde hervorgehoben, dass die erste Sicherheitsfunktion und/oder die zweite Sicherheitsfunktion grundsätzlich Sensoren für eine elektronische Datenverarbeitung aufweisen können.

Gemäß einer bevorzugten Ausgestaltung der Erfindung ist vorgesehen, dass das Sammelbehältnis ein Identifizierungsmittel, insbesondere ein kontaktloses Identifizierungsmittel, aufweist und dass die erste Sicherheitsfunktion eine Leseeinheit für das Identifizierungsmittel aufweist. Das Identifizierungsmittel kann beispielsweise optisch, magnetisch oder elektromagnetisch auslesbar sein. Das Identifizierungsmittel kann beispielsweise als RFID, Barcode, QR-Code oder dergleichen ausgeführt sein.

Mit dem Identifizierungsmittel kann sichergestellt werden, dass das Sammelbehältnis tatsächlich für die Anordnung in dem Aufnahmeraum vorgesehen ist, wobei durch die Positionierung des Identifikationsmittels und der zugeordneten Leseeinheit auch die Positionsüberwachung selbst erfolgen kann. Bei einer geeigneten Anordnung kann somit sichergestellt werden, dass das Sammelbehältnis ordnungsgemäß in dem Aufnahmeraum angeordnet ist, wenn die Leseeinheit das Identifizierungsmittel erkennt. Gerade vor diesem Hintergrund ist es auch von Vorteil, wenn das Sammelbehältnis an dem Behälterrand in dem Aufnahmeraum gehalten ist, weil dann die Lage vergleichsweise genau festgelegt ist. Ein RFID-Chip als mögliches Identifizierungsmittel kann beispielsweise in dem Behältnisrand angeordnet sein.

Gemäß einer Weiterbildung der Erfindung ist vorgesehen, dass der Aufnahmeraum eine Füllhöhenmesseinrichtung für das Sammelbehältnis aufweist. Die Füllhöhenmesseinrichtung kann beispielsweise durch einen Abstandssensoren bereitgestellt werden, der oberhalb des Sammelbehältnisses angeordnet ist. Alternativ ist es auch möglich, insbesondere ein starres Sammelbehältnis in einem oberen Bereich mit Öffnungen zu versehen, sodass dann in Querrichtung das Überschreiten einer vorgegebenen Füllhöhe an den Öffnungen durch eine Lichtschranke oder dergleichen auf besonders einfache Weise überwacht werden kann.

Vorzugsweise ist an einem Gehäuse der Ausschusssammeleinrichtung zumindest eine Zustandsanzeige und/oder ein Bedienelement angeordnet, wobei entsprechende Einrichtungen auch durch ein Touch-Display, einen beleuchteten Taster oder dergleichen miteinander kombiniert werden können.

Wie auch nachfolgend weiter beschrieben, kann eine Aktivierung und Deaktivierung der Sicherheitsfunktion auch unter Berücksichtigung manueller Eingaben und Bestätigungen erfolgen, welche einen Benutzer führen können bzw. einen ordnungsgemäßen Ablauf sicherstellen.

Zustandsdaten und Eingaben können aber auch zusätzlich oder alternativ mit einem HMI, einer zentralen Maschinensteuerung, schnurlosen Kommunikationsgeräten oder dergleichen ausgetauscht werden.

Die Behälterproduktionsanlage für Kunststoffflaschen ist insbesondere Einweg-Kunststoffflaschen vorgesehen. Die Behälterproduktionsanlage umfasst vorzugsweise zumindest eine Maschine ausgewählt aus der Gruppe Blasmaschine, Beschichtungsmaschine, Etikettiermaschine, Füllmaschine und Schließmaschine.

Beispielsweise kann vorgesehen sein, dass die Ausschusssammeleinrichtung stromabwärts an die Blasmaschine anschließt. Grundsätzlich ist auch möglich, dass eine gesamte Behälterproduktionsanlage mehrere der beschriebenen Ausschusssammeleinrichtungen aufweist, die jeweils anderen Maschinen zugeordnet sind.

Üblicherweise ist die Ausschusssammeleinrichtung für noch nicht befüllte Behälter vorgesehen, welche entsprechend ein vergleichsweise geringes Gewicht aufweisen. Grundsätzlich ist es jedoch auch denkbar, die Ausschusssammeleinrichtung bei einer entsprechenden Auslegung für befüllte Behälter einzusetzen, auch wenn diese in der Praxis bei Bedarf häufig anderweitig ausgeschleust werden.

Grundsätzlich kann die Ausschusssammeleinrichtung auch bei der Getränkeproduktion für Vorformlinge eingesetzt werden, auch wenn dort aufgrund der geringeren Größe der Vorformlinge im Vergleich zu ausgeformten Behältern in Form von Flaschen geringere Füllvolumina des Sammelbehältnisses ausreichend sein können.

Die Erfindung wird nachfolgend anhand von exemplarischen Figuren erläutert.

Es zeigen:
- Fig. 1: eine Ausschusssammeleinrichtung in einer Ansicht von vorne,
- Fig. 2 bis Fig. 4: die Ausschusssammeleinrichtung in einem Längsschnitt entlang der Linie A-A der Fig. 1 in verschiedenen Konfigurationen.

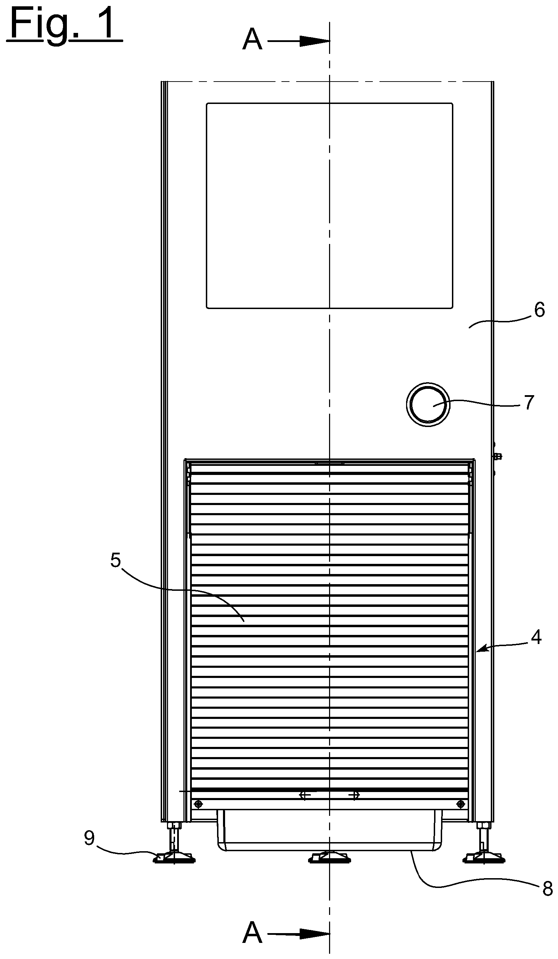

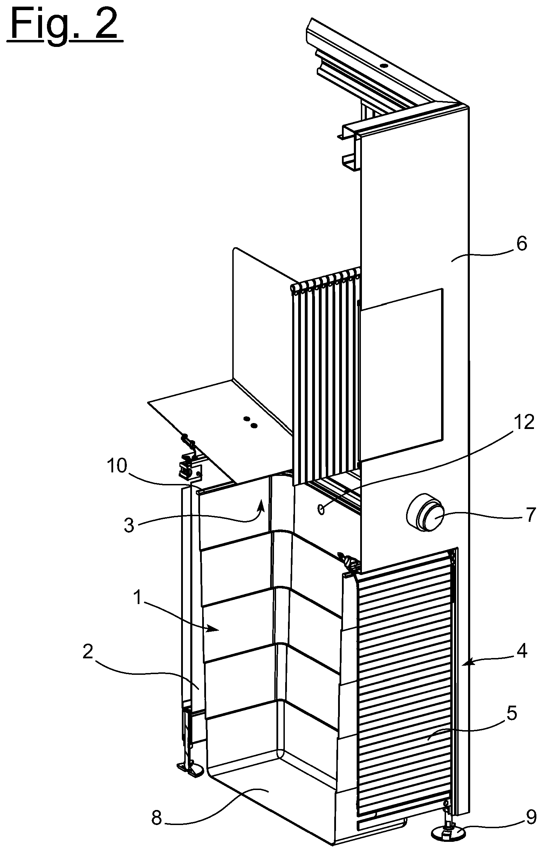

Die Fig. 1 zeigt eine Ausschusssammeleinrichtung für eine Behälterproduktionsanlage in einer Ansicht von vorne, wobei die Fig. 2 einen Längsschnitt entlang der Linie A-A der Fig. 1 zeigt.

Aus einer vergleichenden Betrachtung der Figuren 1 und 2 ist ersichtlich, dass ein Sammelbehältnis 1 in einem Aufnahmeraum 2 angeordnet ist.

Der Aufnahmeraum 2 weist an seiner Oberseite einen Zuführöffnung 3 für nicht dargestellte Ausschussbehälter auf, die bei der Produktion in einer Behälterproduktionsanlage als fehlerhaft identifiziert wurden und entsprechend aus dem Produktionsprozess entfernt werden. Die Behälterproduktionsanlage ist für Kunststoffflaschen, insbesondere Einweg-Kunststoffflaschen, vorgesehen.

Die Ausschussbehälter werden in dem Sammelbehältnis 1 aufgefangen und gesammelt, um dann nachfolgend entsorgt oder vorzugsweise recycelt zu werden.

Bereits in den Figuren 1 und 2 ist zu erkennen, dass eine Entnahmeöffnung 4 für das Sammelbehältnis 1 vorgesehen ist, welche von einer Barriere 5 in Form eines beweglichen Rollladens verschlossen ist.

Der Aufnahmeraum 2 ist in einem Gehäuse 6 gebildet, welches an seiner Vorderseite exemplarisch einen Leuchtdrucktaster 7 als kombiniertes Anzeige- und Bedienelement aufweist.

Insbesondere aus der Fig. 1 ist ersichtlich, dass ein Boden 8 des Sammelbehältnisses 1 oberhalb einer durch Füße 9 des Gehäuses 6 definierten Aufstandsebene angeordnet ist.

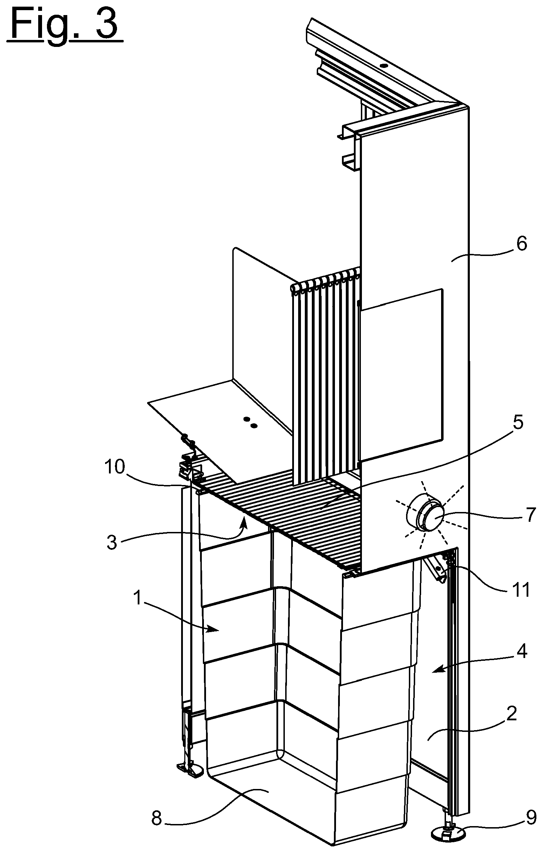

**In** der Fig. 2 ist zu erkennen, dass das Sammelbehältnis 1 unterhalb seines oberen Randes seitliche Öffnungen 12 aufweist, wobei durch die Öffnungen 12 hindurch mit einer Lichtschranke die Füllhöhe der aufgenommenen Ausschussbehälter feststellbar ist. Sobald die Ausschussbehälter in dem Sammelbehältnis 1 die Höhe der Öffnungen 12 erreichen, kann einem Bediener beispielsweise über ein HMI die Anweisung übermittelt werden, das Sammelbehältnis 1 zu leeren bzw. gegen ein leeres Sammelbehältnis 1 auszutauschen. Hierzu kann ein Bediener gemäß der Fig. 3 die Barriere 5 in Form eines Rollladens nach oben und über einen Bogen in eine horizontale Anordnung überführen. Erst wenn die Barriere 5 vollständig nach oben geschoben ist und dann in einer Schließstellung die Zufuhröffnung 3 für die Ausschussbehälter freigibt, kann das Sammelbehältnis 1 entnommen werden.

Im Rahmen der Erfindung ist eine erste Sicherheitsfunktion vorgesehen, welche die Anordnung dessen Sammelbehältnisses 1 in dem Aufnahmeraum 2 überprüft, wobei eine zweite Sicherheitsfunktion in Bezug auf die Zufuhröffnung 3 die Schließstellung der Barriere 5 überprüft.

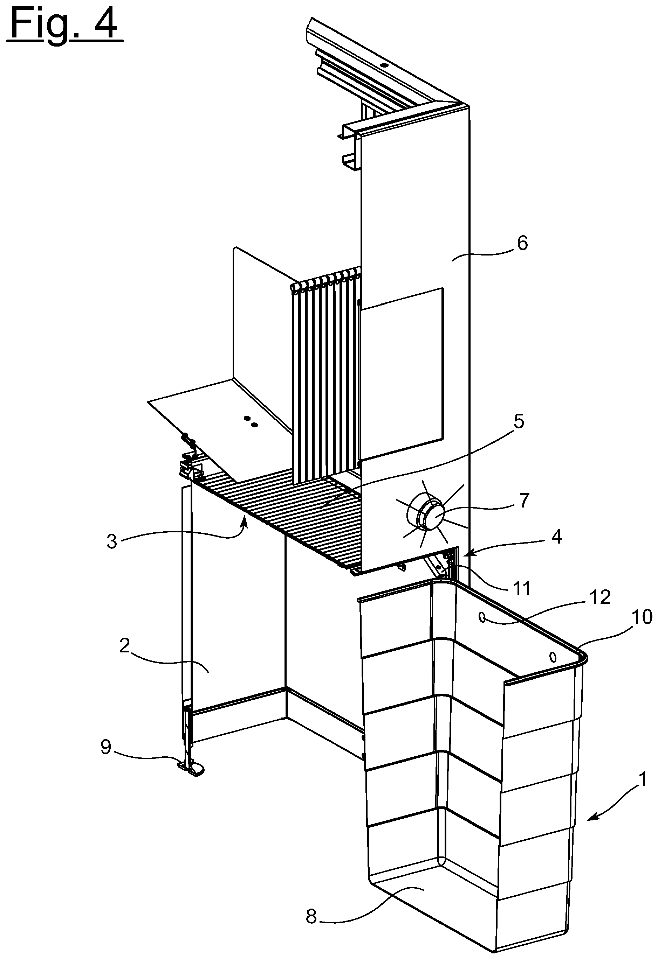

In Bezug auf die Fig. 3 ist es möglich, dass die Barriere 5 mit einem nicht dargestellten Barrierearretierelement selbsttätig verriegelt wird, wenn die Barriere 5 die dargestellte Schließstellung erreicht. Des Weiteren ist es auch möglich, dass mit dem Leuchtdrucktaster 7 das Erreichen der Schließstellung zunächst nur durch ein Blinken angezeigt wird, wobei dann die Bestätigung des Benutzers und die Betätigung des Barrierearretierelementes durch ein Drücken des Leuchtdrucktasters erfolgt, der dann beispielsweise zu einem Dauerlicht wechseln kann (siehe nachfolgend zu Fig. 4).

Eine gewisse Sicherung des Sammelbehältnisses 1 kann auch dadurch erfolgen, dass dieses erst entnommen werden kann, wenn die Barriere 5 die Schließstellung vor der Zuführöffnung 3 erreicht hat. Diese Sicherheitsfunktion kann durch die Kinematik der Barriere 5 nach Art eines Rollladens erreicht werden.

Zusätzlich oder alternativ ist es auch möglich, ein Behältnisarretierelement zum arretieren des Sammelbehältnisses in der Einschubposition vorzusehen, wobei dann durch eine geeignete Steuerung und insbesondere die Betätigung des Leuchtdrucktasters 7 oder eine automatische Arretierung der Barriere 5 ein Entfernen des Sammelbehältnisses vorzugsweise nur dann möglich ist, wenn die Verriegelung der Barriere 5 sichergestellt ist.

Wenn die Barriere 5 wie beschrieben blockiert ist, kann das Sammelbehältnis 1 gemäß der Fig. 4 entnommen werden.

In den Figuren 3 und 4 ist eine vordere Einlaufschräge der Schienen 11 zu erkennen, welche den oberen Behältnisrand 10 aufnehmen. Bei dem Herausziehen des Sammelbehältnisses 1 wird dessen Boden 8 auf dem Untergrund abgestellt, wobei auch ein vergleichsweise großes Sammelbehältnis 1 mit einem Füllvolumen zwischen exemplarisch 120 l und 800 l bei Ausschussbehältern in Form von leeren Kunststoffflaschen noch vergleichsweise leicht bewegt werden kann.

Nachfolgend kann dann das entleerte Sammelbehältnis 1 bzw. ein bereitstehendes leeres Sammelbehältnis 1 wieder in den Aufnahmeraum 2 eingeführt werden, wobei dann mit der ersten Sicherheitsfunktion die Anordnung des Sammelbehältnisses 1 in dem Aufnahmeraum 2 überprüft wird. Beispielsweise kann an dem oberen Behältnisrand 10 ein RFID-Chip vorgesehen sein, welcher auch eine eindeutige Identifizierung des Sammelbehältnisses 1 ermöglicht.

In der Endlage des Sammelbehältnisses 1 in dem Aufnahmeraum 2 kann dann der RFID-Chip von einer entsprechenden Leseeinheit erfasst werden, wodurch auch die ordnungsgemäße Position sichergestellt ist.

Beispielsweise kann die ordnungsmäßige Anordnung des Sammelbehältnisses 1 einem Bediener auch dadurch angezeigt werden, dass der Leuchtdrucktaster entsprechend der Fig. 3 wieder zu blinken beginnt, wobei dann durch eine erneute Betätigung des Leuchtdrucktasters die Barriere 5 entriegelt wird und wieder geschlossen werden kann. Nach einer entsprechenden Quittierung kann dann vorgesehen sein, dass der Leuchtdrucktaster 7 erlischt.

Der Bediener ist angehalten, die Barriere nach der Rückstellung des Sammelbehältnisses 1 und dem Quittieren an dem Leuchtdrucktaster 7 unmittelbar zu schließen. Verbleibt die Barriere über einen längeren Zeitraum von beispielsweise fünf Minuten in der Schließstellung vor der Zuführöffnung 3 kann beispielsweise über ein HMI eine Meldung "Entnahmeöffnung schließen" generiert werden.

Zusätzlich oder alternativ können auch die erste Sicherheitsfunktion und die zweite Sicherheitsfunktion sowie weitere Informationen an einem HMI angezeigt werden.

### Bezugszeichenliste:

- 1: Sammelbehältnis
- 2: Aufnahmeraum
- 3: Zuführöffnung
- 4: Entnahmeöffnung
- 5: Barriere
- 6: Gehäuse
- 7: Leuchtdrucktaster
- 8: Boden
- 9: Füße
- 10: Behältnisrand
- 11: Schienen
- 12: Öffnungen

## Patentansprüche

1. Behälterproduktionsanlage für Kunststoffflaschen umfassend eine Ausschusssammeleinrichtung mit einem Aufnahmeraum (2) für ein Sammelbehältnis (1), wobei der Aufnahmeraum (2) eine durch eine Barriere (5) verschließbare Zuführöffnung (3) für Ausschussbehälter und eine Entnahmeöffnung (4) für das Sammelbehältnis (1) aufweist, **dadurch gekennzeichnet, dass** eine erste Sicherheitsfunktion vorgesehen ist, welche die Anordnung des Sammelbehältnisses (1) in dem Aufnahmeraum (2) überprüft und dass eine zweite Sicherheitsfunktion vorgesehen ist, welche in Bezug auf die Zuführöffnung (3) die Schließstellung der Barriere (5) überprüft.

2. Behälterproduktionsanlage nach Anspruch 1, **dadurch gekennzeichnet, dass** die erste Sicherheitsfunktion und/oder die zweite Sicherheitsfunktion zumindest ein Element ausgewählt aus der Gruppe Lagenschalter, Lichtschranke und Sensor aufweist.

3. Behälterproduktionsanlage nach einem der vorhergehenden Ansprüche, **dadurch gekennzeichnet, dass** ein Barrierearretierelement zum Arretieren der Barriere (5) in der Schließstellung vorgesehen ist.

4. Behälterproduktionsanlage nach einem der vorhergehenden Ansprüche, **dadurch gekennzeichnet, dass** ein Behältnisarretierelement zum Arretieren des Sammelbehältnis (1) in einer Einschubposition vorgesehen ist.

5. Behälterproduktionsanlage nach einem der vorhergehenden Ansprüche, **dadurch gekennzeichnet, dass** die Barriere (5) von der Schließstellung in Bezug auf die Zuführöffnung (3) in eine Betriebsstellung überführbar ist, wobei die Barriere (5) in der Betriebsstellung die Entnahmeöffnung (4) für das Sammelbehältnis (1) verschließt.

6. Behälterproduktionsanlage nach einem der vorhergehenden Ansprüche, **dadurch gekennzeichnet, dass** bei einem Verschluss der Zuführöffnung (3) durch die Barriere (5) oberhalb der Barriere (5) ein Reservoir für eine Zwischenspeicherung von Ausschussbehältern gebildet ist.

7. Behälterproduktionsanlage nach einem der vorhergehenden Ansprüche, **dadurch gekennzeichnet, dass** das Sammelbehältnis (1) als Bestandteil der Ausschusssammeleinrichtung in dem Aufnahmeraum (2) angeordnet und an einem Behältnisrand, insbesondere einem oberen Behältnisrand (10), in dem Aufnahmeraum (2) gehalten ist.

8. Behälterproduktionsanlage nach Anspruch 7, **dadurch gekennzeichnet, dass** der Aufnahmeraum (2) Schienen (11) zum Halten des Behältnisrandes (10) aufweist.

9. Behälterproduktionsanlage nach einem der vorhergehenden Ansprüche, **dadurch gekennzeichnet, dass** das Sammelbehältnis (1) ein Füllvolumen zwischen 120 Liter und 800 Liter aufweist.

10. Behälterproduktionsanlage nach einem der vorhergehenden Ansprüche, **dadurch gekennzeichnet, dass** das Sammelbehältnis (1) als Kunststoffkasten ausgestaltet ist.

11. Behälterproduktionsanlage nach einem der vorhergehenden Ansprüche, **dadurch gekennzeichnet, dass** das Sammelbehältnis (1) ein Identifizierungsmittel aufweist und dass die erste Sicherheitsfunktion eine Leseeinheit für das Identifizierungsmittel aufweist.

12. Behälterproduktionsanlage nach einem der vorhergehenden Ansprüche, **dadurch gekennzeichnet, dass** der Aufnahmeraum (2) eine Füllhöhenmesseinrichtung für das Sammelbehältnis (1) aufweist.

13. Behälterproduktionsanlage nach einem der vorhergehenden Ansprüche, **dadurch gekennzeichnet, dass** an einem Gehäuse (6) zumindest eine Zustandsanzeige angeordnet ist.

14. Behälterproduktionsanlage nach einem der vorhergehenden Ansprüche, **dadurch gekennzeichnet, dass** die erste Sicherheitsfunktion und die zweite Sicherheitsfunktion an eine gemeinsame Maschinensteuerung angeschlossen sind.

15. Behälterproduktionsanlage nach einem der vorhergehenden Ansprüche, mit einer Blasmaschine, wobei die Ausschusssammeleinrichtung stromabwärts an die Blasmaschine anschließt, und insbesondere als integraler Bestandteil der Behälterproduktionsanlage ausgebildet ist.

## Claims

1. A container production installation for plastic bottles, comprising a reject collecting device with a receiving space (2) for a collecting container (1), wherein the receiving space (2) has a feed opening (3) for reject containers which can be closed by a barrier (5), and a removal opening (4) for the collecting container (1), **characterized in that** a first safety function is provided which checks the arrangement of the collecting container (1) in the receiving space (2), and **in that** a second safety function is provided which, with respect to the feed opening (3), checks the closed position of the barrier (5).

2. The container production installation according to claim 1, **characterized in that** the first safety function and/or the second safety function comprise(s) at least one element selected from the group consisting of position switch, light barrier and sensor.

3. The container production installation according to any one of the preceding claims, **characterized in that** a barrier locking element is provided for locking the barrier (5) in the closed position.

4. The container production installation according to any one of the preceding claims, **characterized in that** a container locking element is provided for locking the collecting container (1) in an insertion position.

5. The container production installation according to any one of the preceding claims, **characterized in that** the barrier (5) can be transferred from the closed position with respect to the feed opening (3) to an operating position, wherein the barrier (5) closes the removal opening (4) for the collecting container (1) in the operating position.

6. The container production installation according to any one of the preceding claims, **characterized in that**, when the feed opening (3) is closed by the barrier (5), a reservoir for intermediate storage of reject containers is formed above the barrier (5).

7. The container production installation according to any one of the preceding claims, **characterized in that** the collecting container (1) is arranged as a component of the reject collecting device in the receiving space (2) and is held at a container edge, in particular an upper container edge (10), in the receiving space (2).

8. The container production installation according to claim 7, **characterized in that** the receiving space (2) has rails (11) for holding the container edge (10).

9. The container production installation according to any one of the preceding claims, **characterized in that** the collecting container (1) has a filling volume of between 120 liters and 800 liters.

10. The container production installation according to any one of the preceding claims, **characterized in that** the collecting container (1) is configured as a plastic box.

11. The container production installation according to any one of the preceding claims, **characterized in that** the collecting container (1) has an identification means, and **in that** the first safety function has a reading unit for the identification means.

12. The container production installation according to any one of the preceding claims, **characterized in that** the receiving space (2) has a filling height measuring device for the collecting container (1).

13. The container production installation according to any one of the preceding claims, **characterized in that** at least one status indicator is arranged on a housing (6).

14. The container production installation according to any one of the preceding claims, **characterized in that** the first safety function and the second safety function are connected to a common machine control.

15. The container production installation according to any one of the preceding claims, with a blowing machine, wherein the reject collecting device is connected downstream of the blowing machine and, in particular, is designed as an integral component of the container production installation.

## Revendications

1. Installation de production de récipients pour des bouteilles en plastique, comprenant un système collecteur de rebuts doté d'un espace récepteur (2) pour un contenant collecteur (1), l'espace récepteur (2) comportant un orifice d'alimentation (3) susceptible d'être fermé par une barrière (5) pour des récipients de rebut et un orifice de prélèvement (4) pour le contenant collecteur (1), **caractérisée en ce qu'**il est prévu une première fonction de sécurité, laquelle vérifie le placement du contenant collecteur (1) dans l'espace récepteur (2) et **en ce qu'**il est prévu une deuxième fonction de sécurité, laquelle en rapport à l'orifice d'alimentation (3), vérifie la position de fermeture de la barrière (5).

2. Installation de production de récipients selon la revendication 1, **caractérisée en ce que** la première fonction de sécurité et/ou la deuxième fonction de sécurité comporte au moins un élément sélectionné dans le groupe interrupteur de position, barrière photoélectrique et capteur.

3. Installation de production de récipients selon l'une quelconque des revendications précédentes, **caractérisée en ce qu'**il est prévu un élément bloqueur de barrière, destiné à bloquer la barrière (5) dans la position de fermeture.

4. Installation de production de récipients selon l'une quelconque des revendications précédentes, **caractérisée en ce qu'**il est prévu un élément bloqueur de contenant, destiné à bloquer le contenant collecteur (1) dans une position d'insertion.

5. Installation de production de récipients selon l'une quelconque des revendications précédentes, **caractérisée en ce que** la barrière (5) est susceptible d'être transférée de la position de fermeture en rapport à l'orifice d'alimentation (3) dans une position de service, dans la position de service, la barrière (5) fermant l'orifice de prélèvement (4) pour le contenant collecteur (1).

6. Installation de production de récipients selon l'une quelconque des revendications précédentes, **caractérisée en ce que** lorsque l'orifice d'alimentation (3) est fermé par la barrière (5), un réservoir destiné à un stockage intermédiaire de récipients de rebut est créé au-dessus de la barrière (5).

7. Installation de production de récipients selon l'une quelconque des revendications précédentes, **caractérisée en ce que** le contenant collecteur (1) est placé en tant que partie intégrante du système collecteur de rebuts dans l'espace récepteur (2) et est maintenu dans l'espace récepteur (2) sur un bord de contenant, notamment un bord supérieur de contenant (10).

8. Installation de production de récipients selon la revendication 7, **caractérisée en ce que** l'espace récepteur (2) comporte des rails (11), destinés à maintenir le bord de contenant (10).

9. Installation de production de récipients selon l'une quelconque des revendications précédentes, **caractérisée en ce que** le contenant collecteur (1) présente un volume de remplissage compris entre 120 litres et 800 litres.

10. Installation de production de récipients selon l'une quelconque des revendications précédentes, **caractérisée en ce que** le contenant collecteur (1) est conçu sous la forme d'un caisson en plastique.

11. Installation de production de récipients selon l'une quelconque des revendications précédentes, **caractérisée en ce que** le contenant collecteur (1) comporte un moyen d'identification et **en ce que** la première fonction de sécurité comporte une unité de lecteur pour le moyen d'identification.

12. Installation de production de récipients selon l'une quelconque des revendications précédentes, **caractérisée en ce que** l'espace récepteur (2) comporte un système de mesure du niveau de remplissage pour le contenant collecteur (1).

13. Installation de production de récipients selon l'une quelconque des revendications précédentes, **caractérisée en ce que** sur un carter (6) est placé au moins un affichage d'état.

14. Installation de production de récipients selon l'une quelconque des revendications précédentes, **caractérisée en ce que** la première fonction de sécurité et la deuxième fonction de sécurité sont connectées sur un système de commande commun de la machine.

15. Installation de production de récipients selon l'une quelconque des revendications précédentes, pourvue d'une souffleuse, le système collecteur de rebuts se raccordant en aval sur la souffleuse et étant conçu notamment en tant que partie intégrante intégrale de l'installation de production de récipients.
